(19) Europäisches Patentamt
European Patent Office
Office européen des brevets

(11) **EP 2 542 385 B1**

(12) **EUROPEAN PATENT SPECIFICATION**

(45) Date of publication and mention
of the grant of the patent:
**30.05.2018 Bulletin 2018/22**

(21) Application number: **11750978.6**

(22) Date of filing: **17.02.2011**

(51) Int Cl.:
*B24D 99/00* (2010.01)   *C22C 32/00* (2006.01)
*B24D 3/06* (2006.01)   *C22C 1/04* (2006.01)
*B22F 1/00* (2006.01)   *C22C 26/00* (2006.01)

(86) International application number:
**PCT/RU2011/000087**

(87) International publication number:
**WO 2011/108959 (09.09.2011 Gazette 2011/36)**

(54) **COPPER BASED BINDER FOR THE FABRICATION OF DIAMOND TOOLS**

BINDEMITTEL AUF KUPFERBASIS ZUR HERSTELLUNG VON DIAMANTWERKZEUGEN

LIANT À BASE DE CUIVRE POUR LA FABRICATION D'OUTILS DIAMANTÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.03.2010 RU 2010107315
01.03.2010 RU 2010107314**

(43) Date of publication of application:
**09.01.2013 Bulletin 2013/02**

(73) Proprietors:
• **National University of Science and Technology
MISiS
Moscow 119049 (RU)**
• **The Federal State Budgetary Institution "Federal
Agency for Legal Protection of Military, Special
and Dual Use Intellectual Activity Results"
Moscow 125040 (RU)**

(72) Inventors:
• **LEVASHOV, Evgeny Aleksandrovich
Moscow 117437 (RU)**
• **ANDREEV, Vladimir Alekseevich
Moscow 129327 (RU)**
• **KURBATKINA, Viktoriya Vladimirovna
Moscow 121433 (RU)**
• **ZAITSEV, Alexandr Anatol'evich
Moscow 117279 (RU)**
• **SIDORENKO, Dar'ya Andreevna
Moskovskaya obl. 140155 (RU)**

• **RUPASOV, Sergei Ivanovich
Moscow 115563 (RU)**

(74) Representative: **Glawe, Delfs, Moll
Partnerschaft mbB
von Patent- und Rechtsanwälten
Postfach 13 03 91
20103 Hamburg (DE)**

(56) References cited:
**WO-A1-98/49361       WO-A1-03/083150
DE-A1- 3 718 622       RU-C- 2 172 238
RU-C1- 2 286 241       RU-C1- 2 286 242
SU-A1- 985 111         US-A- 4 362 535
US-A1- 2009 188 171    US-B1- 6 576 037
US-B1- 6 613 122**

• **A. A. ZAITSEV ET AL: "Features of the influence
of nanodispersed additions on the process of and
properties of the Fe-Co-Cu-Sn sintered alloy",
RUSSIAN JOURNAL OF NON-FERROUS
METALS, vol. 49, no. 5, 1 October 2008
(2008-10-01), pages 414-419, XP055381601, US
ISSN: 1067-8212, DOI:
10.3103/S1067821208050180**
• **VILLAR DEL M ET AL: "CONSOLIDATION OF
DIAMOND TOOLS USING CU-CO-FE BASED
ALLOYS AS METALLIC BINDERS", POWDER
METALLURGY, MANEY PUBLISHING, LONDON,
GB, vol. 44, no. 1, 1 January 2001 (2001-01-01),
pages 82-90, XP001036490, ISSN: 0032-5899,
DOI: 10.1179/003258901666211**

**Description**

**Field of the Invention.**

This invention relates to powder metallurgy, more specifically, to composite material production methods, and can be used for the production of copper base binders for diamond tools sued in the construction industry and stone working, including different designs of segment cutting-off abrasive wheels used for highway and runway repairs, refurbishment of metallurgical plants and nuclear power plants, renovation of bridges and other structures, as well as drills and segment cutting-off abrasive wheels for cutting of high-strength reinforced concretes.

Binder affects the design of a tool. It is the binder that determines the choice of the casing material and the method of bounding the diamond layer with the case. Physical and mechanical properties of binders determine potential shapes and sizes of abrasive diamond tools.

**Background of the Invention.**

Pre-alloyed metal powder compositions and their use as binders for the fabrication of diamond tools are known from the prior art, see e.g. US 6,576,037 B1, US 6,613,122 B1, Zaitsev et al., Russian Journal of Non-Ferrous Metals, 2008, vol. 49, no. 5, pages 414-419, and Villar et al., Powder Metallurgy, 2001, vol. 44, no. 1, pages 82-90. Particularly, US 6,576,037 B1, which represents the closest prior-art to the subject-matter of appended independent claims 1 and 3, discloses a copper based binder for the fabrication of diamond tools comprising Cu, Fe and Co with the following component ratios, wt.%:

$$Cu = 20 - 60$$

$$Fe = 20 - 50$$

$$Co = 0 - 30.$$

Known is a diamond tool binder (RU 2286241 C2, publ. 2006.07.07) comprising a metal selected from the group of iron of the Periodic Table of the Elements, titanium carbide and a metal/metalloid compound. Said binder further comprises zirconium carbide to increase binder strength and diamond grain binding.

Disadvantages of said known binder are the use of expensive and noxious cobalt, a reduced cutting speed for highly reinforced concrete and a shorter tool life.

The prototype of the invention disclosed herein is a diamond tool binder (RU 2172238 C2, publ. 2001.08.20, cl. B24D 3/06) comprising a copper base and tin, nickel, aluminum and ultrafine-grained diamond additives.

Disadvantages of said material are insufficient wear resistance, hardness, strength and impact toughness.

**Disclosure of the Invention.**

Given below are examples pf several types of diamond tool binders according to the invention disclosed herein wherein the above object is achieved by adding a copper group metal as the main binder component and an alloying addition in the form of nanopowder.

The copper base diamond tool binder has the following components in the following ratios, wt.%:

$$Cu = 30 - 60$$

$$Fe = 20 - 35$$

$$Co = 10 - 15$$

$$Sn = 0 - 10.5$$

$$WC = 0 - 20$$

$$\text{alloying addition} = 1 - 15.$$

The alloying addition is introduced in the form of 6-25 m²/g specific surface area nanopowder.

In specific embodiments, the alloying addition can be tungsten carbide or tungsten or molybdenum or aluminum oxide or zirconium dioxide or niobium carbide and/or silicon nitride.

In another embodiment of this invention, the copper base diamond tool binder has the following components in the following ratios, wt.%:

$$Cu = 30 - 60$$

$$Fe = 20 - 35$$

$$Co = 10 - 15$$

$$Sn = 0 - 10.5$$

$$WC = 0 - 20$$

$$\text{alloying addition} = 0.01 - 5.$$

The alloying addition is introduced in the form of 75-150 m²/g specific surface area nanopowder.

In specific embodiments, the alloying addition comprises carbon nanotubes or nanosize grained diamond.

In either embodiment of this invention, the presence of copper, iron, cobalt and strengthening nanoparticles in the binder allows the binder to meet the following requirements:

a) good wettability for diamond;
b) strong binding of diamond grains;
c) self-sharpening, i.e. the binder is worn out as diamond grains are blunting so the blunt grains are chipped out to uncover the cutting faces of new grains;
d) sufficient heat stability and high heat conductivity;
e) minimum friction ratio to the material being processed;
f) linear expansion coefficient close to that of diamond;
g) no chemical reaction with the material being processed and the coolant.

Alloying additives of the composition disclosed above provide for high hardness, high-temperature strength and heat stability of the binders which in turn increase the cutting speed and tool life.

For the first embodiment of this invention, alloying additives in quantities below the bottom limit of the range provided herein (1 wt.%) are insufficient for efficient dispersion hardening of the binder, and their effect on the structure and properties of the resultant material is but little. However, if the quantity of the alloying additives is above the top limit of the range provided herein (15 wt.%), the content of the nanosize component is too high. As the alloying additives are more refractory and hard and have higher elasticity moduli compare to copper, they concentrate internal stresses thus causing a pronounced brittle behavior of the material, reducing the strength and wear resistance of the binder, increasing the required sintering temperature and compromising the compressibility. The above alloying additive concentration range (1 - 15 wt.%) is only true for 6-25 m²/g specific surface area nanosized powders because theoretical and experimental data suggest that the efficiency of dispersion hardening depends not only on the content of nanoparticles in the alloy but also on their average size which in turn can be calculated from the specific surface area of the nanopowder.

For the second embodiment of this invention, alloying additives in quantities below the bottom limit of the range provided herein (0.01 wt.%) are insufficient for efficient dispersion hardening of the binder, and their effect on the structure and properties of the resultant material is but little. However, if the quantity of the alloying additives is above the top limit of the range provided herein (5 wt.%), the content of the nanosize component is too high. As the alloying additives are more refractory and hard and have higher elasticity moduli compare to copper, they concentrate internal stresses thus causing a pronounced brittle behavior of the material, reducing the strength and wear resistance of the binder, increasing the required sintering temperature and compromising the compressibility.

The above alloying additive concentration range (0.01 - 5 wt.%) is only true for 75-150 $m^2$/g specific surface area nanosized powders because theoretical and experimental data suggest that the efficiency of dispersion hardening depends not only on the content of nanoparticles in the alloy but also on their average size which in turn can be calculated from the specific surface area of the nanopowder.

## Embodiments of the Invention.

Binders can be produced using the method of powder metallurgy: sintering followed by compression at the sintering temperature. This method has a high output because the total duration of heating to the sintering temperature, exposure to the sintering temperature, compression and cooling to room temperature is within 15 minutes. High heating rates and a homogeneous temperature distribution in the working chamber are provided by electric current passing through the sintering mould serving also as a die.

Exposure to the sintering temperature is immediately followed by compression which produces the required density and shape of the product. The die design allows the process to be conducted in an inert or protective atmosphere to increase the quality of the tool.

Tables 1 - 3 show examples illustrating how the properties of the binder according to the first embodiment of the invention depend on binder composition and the content of the alloying addition.

Table 1. Binder Properties *vs* Nanosize Grained Tungsten Carbide WC Concentration

| Composition, wt. % | Properties** | | | | | |
|---|---|---|---|---|---|---|
| | Porosity, % | Rockwell Hardness | Bending Strength $\sigma^{изг}$, MPa | Specific Wear, $mm/m^2$ | Specific cutting wheel life, $m^2$/mm | Cutting Speed, $cm^2$/min |
| 100% Cu$_{binder}$* | 1 | 92 | 690 | 2.80 | 0.36 | 220 |
| 99.1% Cu$_{binder}$+ 0.9 % WC | 1.1 | 91 | 680 | 2.90 | 0.30 | 210 |
| 99% Cu$_{binder}$+ 1 % WC | 1.5 | 97 | 720 | 2.55 | 0.39 | 255 |
| 96% Cu$_{binder}$+ 4 % WC | 1.5 | 107 | 790 | 1.80 | 0.55 | 350 |
| 90 % Cu$_{binder}$+ 10 % WC | 1.6 | 102 | 765 | 2.20 | 0.45 | 280 |
| 85% Cu$_{binder}$+ 15 % WC | 1.8 | 95 | 700 | 2.65 | 0.38 | 240 |
| 84% Cu$_{binder}$+ 16 % WC | 3 | 87 | 640 | 3.50 | 0.15 | 150 |
| Cu$_{binder}$ composition: 30% Cu; 35% Fe; 15% Co; 10.5% Sn; 9.5% WC **specific wear, specific life and cutting speed are given for cutting wheel tests with highly reinforced M400 concrete. | | | | | | |

Table 2. Binder Properties *vs* Nanosize Grained Zirconium Oxide Concentration

| Composition, wt. % | Properties** | | | | | |
|---|---|---|---|---|---|---|
| | Porosity, % | Rockwell Hardness | Bending Strength $\sigma^{изг}$, MPa | Specific Wear, mm/m$^2$ | Specific cutting wheel life, m$^2$/mm | Cutting Speed, cm$^2$/min |
| 100% Cu$_{binder}$* | 1 | 93 | 720 | 2.50 | 0.4 | 230 |
| 99.1% Cu$_{binder}$+ 0.9 %ZrO$_2$ | 1.1 | 90 | 680 | 2.80 | 0.36 | 220 |
| 99% Cu$_{binder}$+ 1 % ZrO$_2$ | 1.2 | 101 | 745 | 2.35 | 0.43 | 260 |
| 96% Cu$_{binder}$+ 4 % ZrO$_2$ | 1.4 | 110 | 850 | 1.80 | 0.56 | 370 |
| 90 % Cu$_{binder}$ + 10 % ZrO$_2$ | 1.6 | 100 | 810 | 2.10 | 0.48 | 310 |
| 85% Cu$_{binder}$+ 15 % ZrO$_2$ | 1.7 | 98 | 780 | 2.55 | 0.39 | 270 |
| 84% Cu$_{binder}$+ 16 % ZrO$_2$ | 3.0 | 86 | 650 | 3.20 | 0.31 | 180 |
| *Cu$_{binder}$ composition: 40% Cu; 25% Fe; 10% Co; 5% Sn; 20% WC **specific wear, specific life and cutting speed are given for cutting wheel tests with highly reinforced M400 concrete. | | | | | | |

Table 3. Binder Properties *vs* Nanosize Grained Aluminum Oxide Concentration

| Composition, wt.% | Properties** | | | | | |
|---|---|---|---|---|---|---|
| | Porosity, % | Rockwell Hardness | Bending Strength $\sigma^{изг}$, MPa | Specific Wear, mm/m$^2$ | Specific cutting wheel life, m$^2$/mm | Cutting Speed, cm$^2$/min |
| 100% Cu$_{binder}$* | 1.0 | 90 | 650 | 3.0 | 0.33 | 220 |
| 99.1% Cu$_{binder}$+ 0.9 % Al$_2$O$_3$ | 1.1 | 88 | 620 | 3.5 | 0.29 | 210 |
| 99% Cu$_{binder}$+ 1 % Al$_2$O$_3$ | 1.2 | 95 | 690 | 2.9 | 0.34 | 230 |
| 96% Cu$_{binder}$+ 4 % Al$_2$O$_3$ | 1.4 | 100 | 720 | 2.0 | 0.50 | 310 |
| 90 % Cu$_{binder}$+ 10 % Al$_2$O$_3$ | 1.7 | 98 | 710 | 2.4 | 0.42 | 265 |
| 85% Cu$_{binder}$ + 15 % Al$_2$O$_3$ | 1.8 | 94 | 670 | 2.8 | 0.36 | 225 |
| 84% Cu$_{binder}$+ 16 % Al$_2$O$_3$ | 3.0 | 85 | 610 | 3.7 | 0.27 | 150 |
| *Cu$_{binder}$ composition: 60% Cu; 20% Fe; 10% Co; 0% Sn; 10% WC **specific wear, specific life and cutting speed are given for cutting wheel tests with highly reinforced M400 concrete. | | | | | | |

Tables 4 - 6 show examples illustrating how the properties of the binder according to the second embodiment of the invention depend on binder composition and the content of the alloying addition.

Table 4. Binder Properties *vs* Carbon Nanotube Concentration

| Composition, wt.% | Properties** | | | | | |
|---|---|---|---|---|---|---|
| | Porosity, % | Rockwell Hardness | Bending Strength $\sigma^{изг}$, MPa | Specific Wear, mm/m$^2$ | Specific cutting wheel life, m$^2$/mm | Cutting Speed, cm$^2$/min |
| 100% $\underline{Cu_{связка}}$ * | 1 | 92 | 690 | 2,8 | 0,36 | 220 |
| 99.994% $Cu_{binder}$+ 0.006 % $C_{nt}$ | 1,1 | 90 | 690 | 2,9 | 0,34 | 210 |
| 99.99% $Cu_{binder}$ + 0.01 % $C_{nt}$ | 1,1 | 94 | 730 | 2,50 | 0,40 | 315 |
| 99.95% $Cu_{binder}$+ 0.05 % $C_{nt}$ | 1,2 | 98 | 750 | 2,25 | 0,44 | 325 |
| 99 % $Cu_{binder}$+ 1% $C_{nt}$ | 1,2 | 103 | 780 | 1,90 | 0,53 | 340 |
| 95% $Cu_{binder}$+ 5 % $C_{nt}$ | 1,6 | 95 | 730 | 2,40 | 0,42 | 310 |
| 94%$Cu_{binder}$+ 6% $C_{nt}$ | 3,1 | 89 | 620 | 3,7 | 0,27 | 160 |
| *$Cu_{binder}$ composition: 30% Cu; 35% Fe; 15% Co; 10.5% Sn; 9.5% WC  **specific wear, specific life and cutting speed are given for cutting wheel tests with highly reinforced M400 concrete. | | | | | | |

Table 5. Binder Properties *vs* Carbon Nanotube Concentration

| Composition, wt.% | Properties ** | | | | | |
|---|---|---|---|---|---|---|
| | Porosity, % | Rockwell Hardness | Bending Strength $\sigma^{изг}$, MPa | Specific Wear, mm/m$^2$ | Specific cutting wheel life, m$^2$/mm | Cutting Speed, cm$^2$/min |
| 100% $\underline{Cu_{связка}}$ * | 1 | 93 | 720 | 2.50 | 0.40 | 230 |
| 99.994% $Cu_{binder}$+ 0.006 % $C_{nt}$ | 1.1 | 92 | 710 | 2.60 | 0.38 | 220 |
| 99.99% $Cu_{binder}$+ 0.01 % $C_{nt}$ | 1.1 | 97 | 760 | 2.35 | 0.43 | 325 |
| 99.95% $Cu_{binder}$+ 0.05 % $C_{nt}$ | 1.2 | 100 | 790 | 2.10 | 0.48 | 350 |
| 99 % $Cu_{binder}$+ 1% $C_{nt}$ | 1.2 | 108 | 820 | 1.75 | 0.57 | 365 |
| 95% $Cu_{binder}$+ 5 % $C_{nt}$ | 1.4 | 98 | 740 | 2.25 | 0.44 | 315 |

(continued)

| Composition, wt.% | Properties ** | | | | | |
|---|---|---|---|---|---|---|
| | Porosity, % | Rockwell Hardness | Bending Strength $\sigma^{изг}$, MPa | Specific Wear, mm/m$^2$ | Specific cutting wheel life, m$^2$/mm | Cutting Speed, cm$^2$/min |
| 94% Cu$_{binder}$ + 6 % C$_{nt}$ | 3.0 | 90 | 640 | 3.40 | 0.29 | 175 |

*Cu$_{binder}$ composition: 40% Cu; 25% Fe; 10% Co; 5% Sn; 20% WC
**specific wear, specific life and cutting speed are given for cutting wheel tests with highly reinforced M400 concrete.

Table 6. Binder Properties *vs* Nanosize Grained Diamond Concentration

| Composition, wt.% | Properties ** | | | | | |
|---|---|---|---|---|---|---|
| | Porosity, % | Rockwell Hardness | Bending Strength $\sigma^{изг}$, MPa | Specific Wear, mm/m$^2$ | Specific cutting wheel life, m$^2$/mm | Cutting Speed, cm /min |
| 100% Cu$_{связка}$ * | 1 | 93 | 720 | 2.50 | 0.40 | 230 |
| 99.994% Cu$_{binder}$+ 0.006 % C$_{diamt}$ | 1.1 | 92 | 710 | 2.60 | 0.38 | 220 |
| 99.99% Cu$_{binder}$+ 0.01 % C$_{diam}$ | 1.1 | 97 | 760 | 2.35 | 0.43 | 325 |
| 99.95% Cu$_{binder}$+ 0.05 % C$_{diam}$ | 1.2 | 100 | 790 | 2.10 | 0.48 | 350 |
| 99 % Cu$_{binder}$+ 1% C$_{diam}$ | 1.2 | 108 | 820 | 1.75 | 0.57 | 365 |
| 95% Cu$_{binder}$ + 5 % C$_{diam}$ | 1.4 | 98 | 740 | 2.25 | 0.44 | 315 |
| 94% Cu$_{binder}$+ 6 % C$_{diam}$ | 3.0 | 90 | 640 | 3.40 | 0.29 | 175 |

*Cu$_{binder}$ composition: 60% Cu; 20% Fe; 10% Co; 0% Sn; 10% WC
**specific wear, specific life and cutting speed are given for cutting wheel tests with highly reinforced M400 concrete.

Along with the binder composition, the grain size of the alloying additive which can be represented as the specific surface area of the powder has a strong effect on the binder properties. Tables 7 - 8 show examples illustrating how the properties of the binder depend on the alloying powder specific surface area.

Table 7. Binder Properties for the First Embodiment of the Invention *vs* Nanosize Grained Tungsten Carbide WC Powder Specific Surface Area

| WC Specific Surface Area, m$^2$/g | Properties ** | | | | | |
|---|---|---|---|---|---|---|
| | Porosity, % | Rockwell Hardness | Bending Strength $\sigma^{изг}$, MPa | Specific Wear, mm/m$^2$ | Specific cutting wheel life, m$^2$/mm | Cutting Speed, cm$^2$/min |
| 100% Cu$_{binder}$* | 1 | 92 | 690 | 2.8 | 0.36 | 220 |
| 5 | 1.2 | 91 | 650 | 3.2 | 0.30 | 200 |

(continued)

| WC Specific Surface Area, $m^2/g$ | Properties ** | | | | | |
|---|---|---|---|---|---|---|
| | Porosity, % | Rockwell Hardness | Bending Strength $\sigma^{изг}$, MPa | Specific Wear, $mm/m^2$ | Specific cutting wheel life, $m^2/mm$ | Cutting Speed, $cm^2/min$ |
| 6 | 1.5 | 102 | 730 | 2.65 | 0.43 | 250 |
| 10 | 1.8 | 109 | 790 | 1.80 | 0.55 | 350 |
| 20 | 2.0 | 104 | 750 | 2.10 | 0.48 | 320 |
| 25 | 2.1 | 94 | 710 | 2.50 | 0.40 | 225 |
| 27 | 4.5 | 80 | 390 | 4.60 | 0.18 | 170 |

*$Cu_{binder}$ composition: 30% Cu; 35% Fe; 15% Co; 10.5% Sn; 9.5% WC
**specific wear, specific life and cutting speed are given for cutting wheel tests with highly reinforced M400 concrete.

Table 8. Binder Properties *vs* Alloying Additive Specific Surface Area*

| Carbon Nanotube Specific Surface Area, $m^2/g$ | Properties** | | | | | |
|---|---|---|---|---|---|---|
| | Porosity, % | Rockwell Hardness | Bending Strength $\sigma^{изг}$, MPa | Specific Wear, $mm/m^2$ | Specific cutting wheel life, $m^2/mm$ | Cutting Speed, $cm^2/min$ |
| 100% $Cu_{binder}$ * | 1 | 92 | 690 | 2.80 | 0.36 | 220 |
| 70 | 1.1 | 90 | 690 | 2.90 | 0.34 | 210 |
| 75 | 1.1 | 94 | 720 | 2.55 | 0.39 | 300 |
| 100 | 1.2 | 100 | 760 | 2.15 | 0.47 | 325 |
| 125 | 1.4 | 103 | 780 | 1.90 | 0.53 | 340 |
| 150 | 1.6 | 95 | 730 | 2.45 | 0.41 | 315 |
| 160 | 2.3 | 90 | 660 | 3.4 | 0.29 | 200 |

*$Cu_{binder}$ composition: 30% Cu; 35% Fe; 15% Co; 10.5% Sn; 9.5% WC
**specific wear, specific life and cutting speed are given for cutting wheel tests with highly reinforced M400 concrete.

The binder materials according to this invention will provide for better economic results compared to counterparts available from the world's leading manufacturers with respect to the price/life and price/output criteria. For example, the diamond segments for cutting highly reinforced concrete are used in an ultrahard abrasive environment. Conventional matrix hardening by tungsten carbide alloying has a concentration limit due to an increase in the required sintering temperature (this reduces the strength of the diamonds and causes extra wear of the process tooling).

Using copper as the binder base reduces the raw material costs and allows making the product 15-20% cheaper while retaining its operation merits (tool cutting speed and life) by adding WC, W, Mo and other nanoparticles.

Alloying of the materials of the first and second embodiments of the invention provides for high strength, heat conductivity and impact toughness. Controlled low alloying provides for a unique combination of favorable properties e.g. strength, hardness, impact toughness, wear resistance and cutting area friction ratio thus increasing the cutting speed by 30-60% and delivering a tool life under severe loading conditions, e.g. for cutting highly reinforced concrete, by 15-50% longer compared to the conventional material.

**Claims**

1.    Copper based binder for the fabrication of diamond tools comprising Cu, Fe and Co, wherein said binder comprises the following components in the following ratios, wt.%:

$$Cu = 30 - 60$$

$$Fe = 20 - 35$$

$$Co = 10 - 15$$

$$Sn = 0 - 10.5$$

$$WC = 0 - 20$$

$$alloying\ addition = 1 - 15,$$

and wherein said alloying addition is introduced in the form of 6-25 $m^2$/g specific surface area nanopowder.

2. Binder of Claim 1 wherein said alloying addition is tungsten carbide or tungsten or molybdenum or aluminum oxide or zirconium dioxide or niobium carbide and/or silicon nitride.

3. Copper based binder for the fabrication of diamond tools comprising Cu, Fe and Co, wherein said binder comprises the following components in the following ratios, wt.%:

$$Cu = 30 - 60$$

$$Fe = 20 - 35$$

$$Co = 10 - 15$$

$$Sn = 0 - 10.5$$

$$WC = 0 - 20$$

$$alloying\ addition = 0.01 - 5,$$

and wherein said alloying addition is introduced in the form of 75-150 $m^2$/g specific surface area nanopowder.

4. Binder of Claim 3 wherein said alloying addition is in the form of carbon nanotupes or nanosize grained diamond.

**Patentansprüche**

1. Bindemittel auf Kupferbasis für die Herstellung von Diamantwerkzeugen, umfassend Cu, Fe und Co, wobei besagtes Bindemittel die folgenden Komponenten mit folgenden Verhältnissen umfasst, Gew.-%:

$$Cu = 30 - 60$$

$$Fe = 20 - 35$$

$$Co = 10 - 15$$

$$Sn = 0 - 10,5$$

$$WC = 0 - 20$$

$$Legierungszusatz = 1 - 15,$$

und wobei besagter Legierungszusatz in Form eines Nanopulvers mit einer 6-25 m$^2$/g spezifischen Oberfläche eingeführt wird.

2. Bindemittel nach Anspruch 1, wobei der Legierungszusatz Wolframkarbid oder Wolfram oder Molybdän oder Aluminiumoxid oder Zirkoniumdioxid oder Niobiumkarbid und/oder Siliziumnitrid ist.

3. Bindemittel auf Kupferbasis für die Herstellung von Diamantwerkzeugen, umfassend Cu, Fe und Co, wobei besagtes Bindemittel die folgenden Komponenten mit folgenden Verhältnissen umfasst, Gew.-%:

$$Cu = 30 - 60$$

$$Fe = 20 - 35$$

$$Co = 10 - 15$$

$$Sn = 0 - 10,5$$

$$WC = 0 - 20$$

$$Legierungszusatz = 0,01 - 5,$$

und wobei besagter Legierungszusatz in Form eines Nanopulvers mit einer 75-150 m$^2$/g spezifischen Oberfläche eingeführt wird.

4. Bindemittel nach Anspruch 3, wobei die Legierungszugabe in Form von Kohlenstoffnanoröhrchen oder nanoskaligen körnigem Diamant vorliegt.

**Revendications**

1. Liant à base de cuivre pour la fabrication d'outils diamantés comprenant Cu, Fe et Co, ledit liant comprenant les constituants suivants dans les proportions suivantes, en % en poids :

$$Cu = 30 - 60$$

$$Fe = 20 - 35$$

$$Co = 10 - 15$$

$$Sn = 0 - 10,5$$

$$WC = 0 - 20$$

$$\text{additif d'alliage} = 1 - 15,$$

et ledit additif d'alliage étant introduit sous la forme d'une nanopoudre de 6-25 $m^2$/g de surface spécifique.

2. Liant de la revendication 1 dans lequel ledit additif d'alliage est le carbure de tungstène ou le tungstène ou le molybdène ou l'oxyde d'aluminium ou le dioxyde de zirconium ou le carbure de niobium et/ou le nitrure de silicium.

3. Liant à base de cuivre pour la fabrication d'outils diamantés comprenant Cu, Fe et Co, ledit liant comprenant les constituants suivants dans les proportions suivantes, en % en poids :

$$Cu = 30 - 60$$

$$Fe = 20 - 35$$

$$Co = 10 - 15$$

$$Sn = 0 - 10,5$$

$$WC = 0 - 20$$

$$\text{additif d'alliage} = 0,01 - 5,$$

et ledit additif d'alliage étant introduit sous la forme d'une nanopoudre de 75-150 $m^2$/g de surface spécifique.

4. Liant de la revendication 3 dans lequel ledit additif d'alliage se présente sous la forme de nanotubes de carbone ou de diamant à grains nanométriques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6576037 B1
- US 6613122 B1
- RU 2286241 C2
- RU 2172238 C2

### Non-patent literature cited in the description

- **ZAITSEV et al.** *Russian Journal of Non-Ferrous Metals,* 2008, vol. 49 (5), 414-419
- **VILLAR et al.** *Powder Metallurgy,* 2001, vol. 44 (1), 82-90